# EUROPÄISCHE PATENTSCHRIFT

(11) **EP 3 674 160 B1**
(45) Veröffentlichungstag und Bekanntmachung des Hinweises auf die Patenterteilung: **09.02.2022**
(21) Anmeldenummer: 19215870.7
(22) Anmeldetag: 13.12.2019
(51) Int. Cl.: B60W 50/00, B60W 40/068, B60W 40/064, B60K 23/08

(54) **VERFAHREN ZUM BETREIBEN EINES ANTRIEBSSTRANGS EINES KRAFTFAHRZEUGS SOWIE ANTRIEBSSTRANG FÜR EIN KRAFTFAHRZEUG**
DRIVE TRAIN OF A MOTOR VEHICLE AND METHOD FOR OPERATING A DRIVE TRAIN OF A MOTOR VEHICLE
PROCÉDÉ DE FONCTIONNEMENT D'UNE CHAÎNE CINÉMATIQUE D'UN VÉHICULE AUTOMOBILE AINSI QUE CHAÎNE CINÉMATIQUE POUR UN VÉHICULE AUTOMOBILE

(30) Priorität: 28.12.2018 DE 102018133648
(43) Veröffentlichungstag der Anmeldung: 01.07.2020
(73) Patentinhaber: Volkswagen AG, 38440 Wolfsburg (DE)
(72) Erfinder: Schmitz, Dietmar, 38448 Wolfsburg (DE)

(56) Entgegenhaltungen:
- WO-A1-2016/079190
- WO-A1-2017/198443
- DE-A1-102012 020 906
- DE-A1-102016 209 984
- US-A1- 2018 265 092

## Beschreibung

Die Erfindung betrifft ein Verfahren zum Betreiben eines Antriebsstrangs eines Kraftfahrzeugs, insbesondere eines Kraftwagens, gemäß dem Oberbegriff von Patentanspruch 1. Des Weiteren betrifft die Erfindung einen Antriebsstrang für ein Kraftfahrzeug, insbesondere einen Kraftwagen, gemäß dem Oberbegriff von Patentanspruch 8.

Derartige Verfahren zum Betreiben von Antriebssträngen von Kraftfahrzeugen sowie derartige Antriebsstränge für Kraftfahrzeuge sind aus dem allgemeinen Stand der Technik und insbesondere aus dem Serienfahrzeugbau bereits hinlänglich bekannt. Bei dem jeweiligen Verfahren wird der Antriebsstrang mittels einer elektronischen Recheneinrichtung, insbesondere des Antriebsstrangs, von einem Zweiradantrieb zu einem beziehungsweise auf einen Vierradantrieb umgeschaltet. Dies bedeutet, dass der üblicherweise auch als Allradantrieb bezeichnete Vierradantrieb zunächst deaktiviert ist und bei dem Verfahren aktiviert, das heißt zugeschaltet wird. Während der Vierradantrieb deaktiviert ist, ist der Zweiradantrieb aktiviert. Das Kraftfahrzeug umfasst somit beispielsweise wenigstens oder genau vier Räder, über welche das Kraftfahrzeug während seiner Fahrt in Fahrzeughochrichtung nach unten an einer Fahrbahn abgestützt ist, entlang welcher das Kraftfahrzeug während der Fahrt fährt. Während des Zweiradantriebs werden bezogen auf die Räder ausschließlich zwei der Räder mittels einer Antriebseinrichtung des Kraftfahrzeugs angetrieben. Durch Umschalten zu dem Vierradantrieb beziehungsweise durch Zuschalten des Vierradantriebs werden bezogen auf die Räder wenigstens oder genau vier der Räder mittels der Antriebseinrichtung angetrieben, wodurch beispielsweise gegenüber dem Zweiradantrieb eine verbesserte Traktion des Kraftfahrzeugs realisiert werden kann.

Die US 2018/265092 A1 beschreibt eine Steuervorrichtung für ein Fahrzeug. Die Steuervorrichtung umfasst eine Schaltung, die konfiguriert ist, um einen Übergang der Verteilung der Antriebskräfte von Vorder- und Hinterrädern von der ersten Verteilung zur zweiten Verteilung mit einer vorbestimmten Zeitänderungsrate zu bewirken, bis das Fahrzeug an einem Änderungspunkt ankommt. Der Änderungspunkt dabei ist ein Punkt, an dem sich ein Reibungskoeffizient einer Straßenoberfläche vor dem Fahrzeug ändert.

Die WO 2016/079190 A1 beschreibt ein Steuersystem und ein Verfahren zum Steuern eines Antriebsstrangs, beispielsweise eines Kraftfahrzeugantriebsstrangs. Insbesondere, aber nicht ausschließlich, betreffen Aspekte der Erfindung Antriebsstränge von Kraftfahrzeugen wie Geländefahrzeuge (ATVs) mit einem Antriebsstrang, der betreibbar ist, um die Anzahl von Rädern zu ändern, die ein Drehmoment zum Antreiben des Fahrzeugs bereitstellen.

Aufgabe der vorliegenden Erfindung ist es, ein Verfahren und einen Antriebsstrang der eingangs genannten Art derart weiterzuentwickeln, dass der Vierradantrieb auf besonders vorteilhafte Weise zugeschaltet werden kann.

Diese Aufgabe wird erfindungsgemäß durch ein Verfahren mit den Merkmalen des Patentanspruchs 1 sowie durch einen Antriebsstrang mit den Merkmalen des Patentanspruchs 8 gelöst. Vorteilhafte Ausgestaltungen mit zweckmäßigen Weiterbildungen der Erfindung sind in den abhängigen Ansprüchen angegeben.

Ein erster Aspekt der Erfindung betrifft ein Verfahren zum Betreiben eines Antriebsstrangs eines vorzugsweise als Kraftwagen, insbesondere als Personenkraftwagen, ausgebildeten Kraftfahrzeugs. Bei dem Verfahren ist der Antriebsstrang zwischen einem ersten Betriebszustand, in welchem ein Zweiradantrieb des Antriebsstrangs aktiviert ist, und einem zweiten Betriebszustand, in welchem ein Vierradantrieb des Antriebsstrangs aktiviert ist, umschaltbar. Mit anderen Worten ist der Antriebsstrang, insbesondere wahlweise, in dem ersten Betriebszustand und in dem zweiten Betriebszustand betreibbar. Während der erste Betriebszustand und somit der Zweiradantrieb aktiviert sind, sodass der Antriebsstrang in dem ersten Betriebszustand betrieben wird, sind der zweite Betriebszustand und somit der Vierradantrieb deaktiviert. Während der zweite Betriebszustand und somit der Vierradantrieb aktiviert sind, sodass der Antriebsstrang in dem zweiten Betriebszustand betrieben wird, sind der erste Betriebszustand und somit der Zweiradantrieb deaktiviert. Bei dem Verfahren wird der Antriebsstrang mittels einer elektronischen Recheneinrichtung von einem der Betriebszustände in den jeweils anderen Betriebszustand umgeschaltet. Somit wird beispielsweise der Antriebsstrang bei dem Verfahren von dem ersten Betriebszustand und somit von dem Zweiradantrieb zu dem oder auf den zweiten Betriebszustand und somit zu dem oder auf den Vierradantrieb umgeschaltet, und/oder bei dem Verfahren wird der Antriebsstrang von dem zweiten Betriebszustand und somit von dem Vierradantrieb zu dem oder auf den ersten Betriebszustand und somit zu dem oder auf den Zweiradantrieb umgeschaltet. Die Recheneinrichtung ist beispielsweise Bestandteil des Kraftfahrzeugs und kann wenigstens oder genau ein elektronisches Steuergerät oder mehrere elektronische Steuergeräte umfassen.

Bei dem Verfahren ist beispielsweise zunächst der Zweiradantrieb aktiviert, während der Vierradantrieb deaktiviert ist. Das Umschalten von dem Zweiradantrieb zu dem Vierradantrieb wird auch als Zuschalten des Vierradantriebs bezeichnet, sodass der zunächst deaktivierte Vierradantrieb aktiviert und somit zugeschaltet wird. Ist beispielsweise zunächst der Vierradantrieb aktiviert, während der Zweiradantrieb deaktiviert ist, so kann dann beispielsweise der Vierradantrieb deaktiviert oder abgeschaltet werden, wodurch der Zweiradantrieb aktiviert wird. Das Umschalten von dem Zweiradantrieb zu dem Vierradantrieb wird auch als Zuschalten des Vierradantriebs bezeichnet, sodass der zunächst deaktivierte Vierradantrieb aktiviert und somit zugeschaltet wird. Das Umschalten von dem Vierradantrieb zu dem Zweiradantrieb wird auch als Abschalten oder Deaktivieren des Vierradantriebs bezeichnet, sodass der zunächst aktivierte Vierradantrieb deaktiviert oder abgeschaltet wird.

Der Antriebsstrang umfasst beispielsweise wenigstens oder genau vier Räder des Kraftfahrzeugs. Die Räder sind Bodenkontaktelemente, über welche das Kraftfahrzeug in Fahrzeughochrichtung nach unten an einer Fahrbahn abstützbar beziehungsweise abgestützt ist, während das Kraftfahrzeug entlang der Fahrbahn fährt. Vorzugsweise wird das Verfahren während einer Fahrt des Kraftfahrzeugs durchgeführt, welches während seiner Fahrt entlang der Fahrbahn fährt. Während der Fahrt rollen die Räder an der Fahrbahn ab. Dabei wird das Kraftfahrzeug beispielsweise mittels einer Antriebseinrichtung des Antriebsstrangs angetrieben. Während des Zweiradantriebs, während welchem der Zweiradantrieb aktiviert und der Vierradantrieb deaktiviert ist, werden bezogen auf die Räder genau zwei der Räder mittels der Antriebseinrichtung angetrieben. Durch das Zuschalten des Vierradantriebs beziehungsweise durch das Umschalten von dem Zweiradantrieb zu dem Vierradantrieb, während welchem der Zweiradantrieb deaktiviert und der Vierradantrieb aktiviert ist, werden mittels der Antriebseinrichtung bezogen auf die Räder wenigstens oder genau vier der Räder oder alle Räder des Kraftfahrzeugs angetrieben, sodass der Vierradantrieb beispielsweise ein Allradantrieb ist. Durch das Abschalten des zunächst aktivierten Vierradantriebs beziehungsweise durch das Umschalten von dem Vierradantrieb zu dem Zweiradantrieb werden mittels der Antriebseinrichtung bezogen auf die Räder höchstens oder genau zwei der Räder des Kraftfahrzeugs angetrieben.

Um nun den Vierradantrieb besonders vorteilhaft und insbesondere besonders bedarfsgerecht und rechtzeitig beziehungsweise frühzeitig zuschalten und/oder abschalten zu können, sodass beispielsweise das Zuschalten beziehungsweise Abschalten des Vierradantriebs rechtzeitig beziehungsweise hinreichend früh, insbesondere vollständig, abgeschlossen ist, ist es erfindungsgemäß vorgesehen, dass während der Fahrt des Kraftfahrzeugs mittels der elektronischen Recheneinrichtung ein Bedarfszeitpunkt ermittelt wird, zu welchem das Umschalten von dem einen Betriebszustand zu dem jeweils anderen Betriebszustand, das heißt das Zuschalten beziehungsweise Abschalten des Vierradantriebs spätestens abgeschlossen sein muss. Der Bedarfszeitpunkt ist dabei bezüglich des Ermittelns des Bedarfszeitpunkts ein zukünftiger Zeitpunkt, sodass der Bedarfszeitpunkt bezüglich des Ermittelns des Bedarfszeitpunkts in der Zukunft liegt. Dies bedeutet, dass der Bedarfszeitpunkt zu einem ersten Zeitpunkt beziehungsweise während einer ersten Zeitspanne ermittelt wird, wobei der Bedarfszeitpunkt zeitlich auf den ersten Zeitpunkt beziehungsweise zeitlich auf die erste Zeitspanne folgt, insbesondere derart, dass zwischen dem ersten Zeitpunkt beziehungsweise der ersten Zeitspanne und dem Bedarfszeitpunkt ein zeitlicher Abstand liegt. Da der Bedarfszeitpunkt bezüglich des Ermittelns des Bedarfszeitpunkts in der Zukunft liegt, wird der Bedarfszeitpunkt auch als zukünftiger Bedarfszeitpunkt bezeichnet.

Des Weiteren ist es erfindungsgemäß vorgesehen, dass in Abhängigkeit von dem ermittelten Bedarfszeitpunkt mit dem Umschalten von dem einen Betriebszustand zu dem anderen Betriebszustand zu einem dem Bedarfszeitpunkt zeitlich vorweggehenden und zeitlich von dem Bedarfszeitpunkt beabstandeten Startzeitpunkt derart begonnen wird, dass das Umschalten spätestens zu dem Bedarfszeitpunkt, insbesondere vollständig, abgeschlossen ist. Dies bedeutet, dass mit dem Umschalten nicht zu dem Bedarfszeitpunkt begonnen wird, sondern mit dem Umschalten wird zeitlich vor dem Bedarfszeitpunkt derart begonnen, dass das Umschalten spätestens zu dem Bedarfszeitpunkt, insbesondere vollständig, abgeschlossen ist. Da der Bedarfszeitpunkt bezüglich des Ermittelns des Bedarfszeitpunkts in der Zukunft liegt, wird der Bedarfszeitpunkt im Rahmen des erfindungsgemäßen Verfahren vorhergesagt, das heißt prädiziert oder prädiktiv ermittelt.

Durch das Zuschalten des Vierradantriebs wird beispielsweise die sogenannte Traktion des Kraftfahrzeugs gegenüber dem Zweiradantrieb erhöht. Durch das Abschalten des Vierradantriebs kann ein besonders effizienter und somit energieverbrauchsarmer Betrieb des Antriebsstrangs realisiert werden. Der Bedarfszeitpunkt ist gegenüber dem zuvor beschriebenen ersten Zeitpunkt beziehungsweise gegenüber der zuvor beschriebenen ersten Zeitspanne ein zukünftiger zweiter Zeitpunkt, bezüglich welchem beispielsweise ermittelt wird oder wurde, dass der Vierradantrieb und die damit einhergehende höhere Traktion gegenüber dem Zweiradantrieb mit einer gewissen Wahrscheinlichkeit vorteilhaft sein kann, insbesondere im Hinblick auf eine Realisierung einer hohen Fahrdynamik und/oder eines sicheren Fahrzustands des Kraftfahrzeugs. Ferner ist es insbesondere im Hinblick auf das Abschalten des Vierradantriebs denkbar, das bezüglich des zweiten Zeitpunkts ermittelt wird oder wurde, dass der Zweiradantrieb gegenüber dem Vierradantrieb mit einer gewissen Wahrscheinlichkeit vorteilhaft sein kann, insbesondere im Hinblick auf eine Realisierung eines energieverbrauchsarmen Betriebs bei gleichzeitiger Realisierung einer hinreichenden Traktion und somit eines sicheren Fahrzustands des Kraftfahrzeugs.

Da nun mit dem Zuschalten beziehungsweise Abschalten des Vierradantriebs nicht zu dem Bedarfszeitpunkt selbst, sondern zu dem dem Bedarfszeitpunkt zeitlich vorweg gehenden Startzeitpunkt begonnen wird, sodass das Zuschalten beziehungsweise Abschalten des Vierradantriebs spätestens zu dem Bedarfszeitpunkt, insbesondere vollständig, abgeschlossen ist, wird mit dem Zuschalten beziehungsweise Abschalten des Vierradantriebs zu einem dritten Zeitpunkt in Form des Startzeitpunkts begonnen, wobei zu dem Startzeitpunkt das abgeschlossene Zuschalten beziehungsweise Abschalten des Vierradantriebs im Vergleich zu dem Bedarfszeitpunkt noch nicht erforderlich ist. Der dritte Zeitpunkt geht beispielsweise dem Bedarfszeitpunkt vorweg und schließt sich an den ersten Zeitpunkt beziehungsweise an die erste Zeitspanne an. Da somit mit dem Zuschalten beziehungsweise Abschalten des Vierradantriebs begonnen wird, bevor das vollständige Zuschalten beziehungsweise Abschalten des Vierradantriebs erforderlich ist, denn dieses vollständige Zuschalten beziehungsweise Abschalten des Vierradantriebs ist spätestens zu dem Bedarfszeitpunkt erforderlich beziehungsweise gewünscht, wird im Rahmen des erfindungsgemäßen Verfahrens der Vierradantriebs prädiktiv, das heißt vorausschauend zugeschaltet beziehungsweise abgeschaltet. Der Vierradantrieb ist dann spätestens zu dem Bedarfszeitpunkt vollständig zugeschaltet beziehungsweise abgeschaltet, zu welchem der Vierradantrieb gegenüber dem Zweiradantrieb beziehungsweise der Zweiradantrieb gegenüber dem Vierradantrieb vorteilhaft ist beziehungsweise als vorteilhaft eingeschätzt wurde.

Durch das erfindungsgemäße Verfahren kann einerseits ermöglicht werden, dass das Kraftfahrzeug möglichst lange, das heißt möglichst lange Zeitspannen und somit möglichst große Teile während eines Gesamtbetriebs des Kraftfahrzeugs mit dem Zweiradantrieb betrieben wird, wodurch ein besonders effizienter und somit wirkungsgradgünstiger beziehungsweise energieverbrauchsarmer, insbesondere kraftstoffverbrauchsarmer, Betrieb des Kraftfahrzeugs gewährleistet werden kann. Andererseits kann durch das erfindungsgemäße Verfahren ein besonders sicherer Betrieb und/oder eine besonders hohe Fahrdynamik des Kraftfahrzeugs gewährleistet werden, da der Vierradantrieb besonders bedarfsgerecht dann und vorzugsweise nur dann zugeschaltet wird beziehungsweise zugeschaltet werden kann, wenn dies aus Sicherheitsgründen und/oder Fahrdynamikgründen vorteilhaft ist beziehungsweise als vorteilhaft, insbesondere mittels der elektronischen Recheneinrichtung ermittelt wurde. Der Startzeitpunkt liegt beispielsweise bezüglich des Ermittelns des Bedarfszeitpunkts in der Zukunft, wobei der Startzeitpunkt beispielsweise zeitlich zwischen dem ersten Zeitpunkt beziehungsweise der ersten Zeitspanne und dem Bedarfszeitpunkt liegt.

Außerdem liegt der Erfindung die Erkenntnis zugrunde, dass üblicherweise eine auch als Aufbauzeit oder Aufbauzeitspanne bezeichnete Umschaltzeitspanne erforderlich ist, um den Antriebsstrang von dem einen Betriebszustand zu dem anderen Betriebszustand umzuschalten. Dies bedeutet, dass das Zuschalten beziehungsweise Abschalten des Vierradantriebs nicht unendlich schnell stattfindet und somit nicht mit dem Beginn des Umschaltens zusammenfällt. Mit anderen Worten benötigt der Antriebsstrang die zu dem Startzeitpunkt beginnende und gegenüber Null größere Umschaltzeitspanne, um beginnend zu dem Startzeitpunkt das Zuschalten beziehungsweise Abschalten des Vierradantriebs, insbesondere vollständig, abzuschließen. Das zu oder mit dem Startzeitpunkt beginnende Zuschalten beziehungsweise Abschalten des Vierradantriebs endet beispielsweise zu einem Umschalt- oder Betriebszeitpunkt, zu welchem das zu dem Startzeitpunkt beginnende Zuschalten beziehungsweise Abschalten des Vierradantriebs, insbesondere vollständig, abgeschlossen ist. Somit erstreckt sich die Umschaltzeitspanne beispielsweise genau von dem Startzeitpunkt bis genau zu dem Umschaltzeitpunkt, insbesondere durchgängig beziehungsweise unterbrechnungsfrei, wobei der Betriebszeitpunkt (Umschaltzeitpunkt) zeitlich auf den Startzeitpunkt folgt und von dem Startzeitpunkt, insbesondere um die Umschaltzeitspanne, beabstandet ist. Die Umschaltzeitspanne kann beispielsweise in einem Bereich von einschließlich 300 Millisekunden bis einschließlich 400 Millisekunden liegen.

Der Startzeitpunkt zeichnet sich beispielsweise durch wenigstens ein Startereignis oder Startsignal aus, welches beispielsweise von der elektronischen Recheneinrichtung bereitgestellt wird, um durch das Startsignal mit dem Zuschalten des Vierradantriebs zu beginnen. Mit anderen Worten stellt die elektronische Recheneinrichtung zum Startzeitpunkt das Startsignal bereit, um zu dem Startzeitpunkt das Zuschalten beziehungsweise Abschalten des Vierradantriebs zu bewirken. Beginnend zu dem Startzeitpunkt benötigt der Antriebsstrang dann die Umschaltzeitspanne, bis das Zuschalten beziehungsweise Abschalten des Vierradantriebs zu dem Umschaltzeitpunkt vollständig abgeschlossen ist. Im Hinblick auf das Zuschalten umfasst oder charakterisiert das Startsignal beispielsweise ein Drehmoment, welches von der Antriebseinrichtung durch Zuschalten des Vierradantriebs, insbesondere zusätzlich im Vergleich zu dem Zweiradantrieb, bereitzustellen ist. Der Betriebszeitpunkt zeichnet sich beispielsweise dadurch aus, dass die Antriebseinrichtung ab oder zu dem Betriebszeitpunkt das, insbesondere zusätzliche, Drehmoment bereitstellt.

Da der Bedarfszeitpunkt im Rahmen des erfindungsgemäßen Verfahrens vorhergesagt wird und da der Vierradantrieb prädiktiv zugeschaltet beziehungsweise abgeschaltet wird, fällt der Umschaltzeitpunkt (Betriebszeitpunkt) mit dem Bedarfszeitpunkt zusammen oder aber der Umschaltzeitpunkt geht dem Bedarfszeitpunkt zeitlich vorweg, sodass mit einer sehr hohen Wahrscheinlichkeit sichergestellt werden kann, dass spätestens zum dem Bedarfszeitpunkt der vor dem Startzeitpunkt deaktivierte und vor dem Umschaltzeitpunkt und nach dem Startzeitpunkt noch nicht vollständig aktivierte Vierradantrieb spätestens zu dem Bedarfszeitpunkt vollständig zugeschaltet, das heißt aktiviert ist beziehungsweise dass spätestens zum dem Bedarfszeitpunkt der vor dem Startzeitpunkt aktivierte und vor dem Umschaltzeitpunkt und nach dem Startzeitpunkt noch nicht vollständig deaktivierte Vierradantrieb spätestens zu dem Bedarfszeitpunkt vollständig abgeschaltet, das heißt deaktiviert ist. Hierdurch können unnötige Zuschaltungen des Vierradantriebs und übermäßig lange Zeitspannen, während welchen der Vierradantrieb aktiviert ist, vermieden werden, sodass das Kraftfahrzeug beziehungsweise der Antriebsstrang besonders große Teile seines Gesamtbetriebs mit dem Zweiradantrieb betrieben werden kann. Dadurch kann der Energieverbrauch besonders gering gehalten werden. Außerdem kann der Vierradantrieb dann und vorzugsweise nur dann zugeschaltet beziehungsweise abgeschaltet werden, wenn dies als erforderlich eingeschätzt wurde, sodass darüber hinaus ein besonders sicherer und/oder sportlicher Betrieb des Antriebsstrangs und somit des Kraftfahrzeugs insgesamt realisierbar ist.

Der Bedarfszeitpunkt wird in Abhängigkeit von einem Reibwert, insbesondere mittels der elektrischen Recheneinrichtung, ermittelt. Der Reibwert charakterisiert dabei zumindest eine Reibung zwischen wenigstens einem der Räder des Antriebsstrangs und der Fahrbahn, entlang welcher das Kraftfahrzeug fährt. Hierdurch kann der Reibung, insbesondere einer etwaigen Änderung der Reibung, durch das Zuschalten beziehungsweise Abschalten des Vierradantriebs Rechnung getragen werden, sodass ein besonders bedarfsgerechtes Zuschalten beziehungsweise Abschalten des Vierradantriebs realisiert werden kann.

Um den Reibwert und somit beispielsweise eine Änderung des Reibwerts besonders frühzeitig ermitteln und somit den Vierradantrieb bedarfsgerecht und insbesondere prädiktiv zuschalten zu können, ist vorgesehen, dass eine eine Drehzahl des Rads charakterisierende Messgröße mittels wenigstens eines Sensors, insbesondere mittels eines Drehzahlsensors, erfasst wird, wobei der Sensor vorzugsweise Bestandteil des Kraftfahrzeugs ist. Der Sensor stellt dabei ein elektrisches Signal bereit, welches die erfasste Messgröße charakterisiert. Das Signal weist dabei eine Anzahl an Signalereignisse, insbesondere an Signalflanken, auf, auf deren Basis die Drehzahl ermittelbar ist beziehungsweise ermittelt wird. Die Anzahl beträgt dabei mindestens 80, insbesondere 90. Vorzugsweise beträgt die Anzahl mindestens oder genau 96, sodass das Signal mindestens 80, insbesondere mindestens 90, und vorzugsweise genau 96 Signalereignisse, insbesondere einfach auch als Flanken bezeichnete Signalflanken, umfasst.

In vorteilhafter Ausgestaltung der Erfindung wird mit dem Umschalten in Abhängigkeit von der zuvor beschriebenen Umschaltzeitspanne begonnen, die der Antriebsstrang für das, insbesondere vollständige, Umschalten von dem einen Betriebszustand zu dem anderen Betriebszustand benötigt. Insbesondere wird beispielsweise mittels der elektronischen Recheneinrichtung der Startzeitpunkt, zu welchem mit dem Umschalten begonnen wird, sodass das Umschalten spätestens zu dem Bedarfszeitpunkt vollständig abgeschlossen ist, in Abhängigkeit von der Umschaltzeitspanne ermittelt, insbesondere berechnet, sodass mit einer hohen Wahrscheinlichkeit sichergestellt werden kann, dass spätestens zu dem Bedarfszeitpunkt der Vierradantrieb vollständig zugeschaltet beziehungsweise abgeschaltet ist.

Dabei hat es sich als besonders vorteilhaft gezeigt, wenn die Umschaltzeit mittels der elektronischen Recheneinrichtung, insbesondere situationsbedingt, berechnet wird. Hierunter ist insbesondere zu verstehen, dass in jeweiligen, zeitlich aufeinander folgenden Fahrsituationen, in welchen das erfindungsgemäße Verfahren durchgeführt wird, je Fahrsituation die Umschaltzeitspanne mittels der elektronischen Recheneinrichtung individuell beziehungsweise jeweils, das heißt aufs Neue, berechnet wird. Hierdurch kann für jede Fahrsituation sichergestellt werden, dass das Zuschalten des Vierradantriebs spätestens zu dem Bedarfszeitpunkt vollständig abgeschlossen ist. Dieser Ausführungsform liegt die Erkenntnis zugrunde, dass die Umschaltzeit gegebenenfalls variieren kann, insbesondere aufgrund äußerer Randbedingungen wie beispielsweise einer Umgebungstemperatur. Beispielsweise wird die Umschaltzeitspanne in Abhängigkeit von der Umgebungstemperatur und/oder in Abhängigkeit von einer für das Umschalten zur Verfügung stehenden Energie, insbesondere elektrischen Energie, berechnet.

Eine weitere Ausführungsform zeichnet sich dadurch aus, dass die Umschaltzeitspanne in Abhängigkeit von wenigstens einem Wert ermittelt wird, welcher in einem, insbesondere elektronischen, Speicher, insbesondere der Recheneinrichtung, gespeichert ist. Hierzu wird beispielsweise der Wert aus dem Speicher abgerufen und gegebenenfalls verarbeitet. Dieser Ausführungsform liegt die Erkenntnis zugrunde, dass zumindest ein Teil, insbesondere zumindest ein überwiegender Teil, der Umschaltzeitspanne oder die gesamte Umschaltzeitspanne zumindest im Wesentlichen konstant sein kann und somit beispielsweise durch den Wert charakterisiert beziehungsweise definiert wird. Wird beispielsweise im Rahmen des Zuschaltens des Vierradantriebs wenigstens eine elektrische Maschine, welche während des Zweiradantriebs und somit zunächst deaktiviert ist, aktiviert, das heißt zugeschaltet, so benötigt die beispielsweise, insbesondere genau, einer Achse des Antriebsstrangs beziehungsweise des Kraftfahrzeugs zugeordnete elektrische Maschine die zum Startzeitpunkt beginnende und beispielsweise zu dem Umschaltzeitpunkt endende Umschaltzeitspanne, um ein bei dem Umschalten vorgegebenes beziehungsweise durch das Startsignal charakterisierte und somit gewünschtes Drehmoment, insbesondere zum Antreiben von Rädern der Achse, bereitzustellen. Bezüglich der elektrischen Maschine liegt die Umschaltzeitspanne insbesondere darin begründet, dass ein Feldaufbau der beispielsweise als Asynchron-Maschine ausgebildeten elektrischen Maschine während der Umschaltzeitspanne stattfinden muss, sodass die elektrische Maschine beispielsweise zu dem Umschaltzeitpunkt das gewünschte Drehmoment bereitstellen kann. Im Rahmen des Feldaufbaus wird ein elektrisches Feld aufgebaut, um beispielsweise einen Rotor der elektrischen Maschine von einem Stator der elektrischen Maschine anzutreiben und in der Folge das gewünschte Drehmoment durch die elektrische Maschine bereitstellen zu können. Dies bedeutet, dass der Feldaufbau ein gewisses Zeitintervall benötigt, welches beispielsweise durch den Wert charakterisiert wird. Die Umschaltzeitspanne besteht beispielsweise ausschließlich aus dem Zeitintervall für den Feldaufbau oder zumindest ein Teil der Umschaltzeitspanne ist das Zeitintervall für den Feldaufbau, sodass die Umschaltzeitspanne zumindest das Zeitintervall für den Feldaufbau der elektrischen Maschine umfasst.

Dabei hat es sich als besonders vorteilhaft gezeigt, wenn der Reibwert eine aktuelle Reibung zwischen dem Rad und der Fahrbahn charakterisiert. Hierdurch kann ein besonders sicherer Betrieb gewährleistet werden.

Um einen besonders sichereren Betrieb und/oder eine besonders hohe Fahrdynamik des Kraftfahrzeugs realisieren zu können, ist es in weiterer Ausgestaltung der Erfindung vorgesehen, dass der Reibwert eine bezüglich des Ermittelns des Reibwerts in der Zukunft liegende Reibung zwischen dem Rad und der Fahrbahn charakterisiert. Mit anderen Worten charakterisiert der Reibwert nicht oder nicht nur eine beziehungsweise die aktuelle Reibung zwischen dem Rad und der Fahrbahn, sondern der Reibwert charakterisiert eine Reibung, welche mit einer gewissen Wahrscheinlichkeit in Zukunft zwischen dem Rad und der Fahrbahn existierende Reibung. Dies bedeutet, dass der Reibwert beispielsweise zu einem vierten Zeitpunkt beziehungsweise während einer zweiten Zeitspanne ermittelt wird, wobei der Reibwert jedoch eine Reibung charakterisiert, die zwischen dem Rad und der Fahrbahn zu einem auf den vierten Zeitpunkt folgenden fünften Zeitpunkt beziehungsweise während einer auf die zweite Zeitspanne folgenden dritten Zeitspanne existiert beziehungsweise herrscht. Dadurch kann eine besonders vorteilhafte, bedarfsgerechte und prädiktive Zuschaltung beziehungsweise Abschaltung des Vierradantriebs gewährleistet werden.

Das jeweilige Signalereignis, insbesondere die jeweilige Signalflanke, korrespondiert beispielsweise mit einer jeweiligen Drehstellung des Rads, sodass durch das Ermitteln beziehungsweise Erfassen von zwei unmittelbar Aufeinanderfolgen der Signalflanken eine Drehung des Rads um einen Drehwinkel erfasst beziehungsweise ermittelt werden kann. Durch die hohe Anzahl der Signalflanken kann eine vollständige Umdrehung des Rads besonders fein beziehungsweise präzise aufgelöst werden, da beispielsweise durch das Erfassen der Anzahl der Signalflanken genau eine vollständige Umdrehung des Rads erfasst werden kann. Da nun die sehr hohe Anzahl an Signalflanken zur Verfügung steht, um die Drehung und somit die Drehzahl des Rads zu ermitteln, können besonders frühzeitig Änderungen der Drehzahl und somit etwaige Änderungen der Reibung beziehungsweise des Reibwerts ermittelt werden. Dies liegt darin begründet, dass mittels des Sensors bereits bei einer sehr geringen, gegenüber einer vollständigen Umdrehung des Rads geringeren Drehung des Rads eine gegenüber der Anzahl geringere, jedoch gegenüber Null größere Teilanzahl der Signalflanken erfasst wird. Hierdurch ist eine besonders präzise und frühe und/oder prädiktive und auch als Reibwertabschätzung oder Reibwertermittlung bezeichnete Abschätzung oder Ermittlung des Reibwerts möglich, sodass sich in der Folge eine besonders bedarfsgerechte und vorausschauende Zuschaltung beziehungsweise Abschaltung des Vierradantriebs realisieren lässt.

Das jeweilige Signalereignis, insbesondere die jeweilige Signalflanke, ist ein Drehzahlimpuls, wobei die Drehzahlimpulse ermittelt beziehungsweise ausgewertet werden, um die Drehzahl des Rads zu ermitteln. Dabei ist es denkbar, dass die Drehzahlimpulse mit ermittelten beziehungsweise berechneten Kräften und/oder Drehmomenten, die beispielsweise aus das und/oder an dem Rad wirken, korreliert werden, um dadurch die Drehzahl und somit den Reibwert besonders präzise ermitteln zu können.

Als besonders vorteilhaft hat es sich dabei gezeigt, wenn die Drehzahl des Rads in Abhängigkeit von einer Teilmenge der Signalflanken ermittelt wird, wobei die Teilmenge größer als eins, insbesondere größer als drei, und geringer als die Anzahl ist. Vorzugsweise ist die Teilmenge geringer als zehn, insbesondere geringer als fünf. Hierdurch lässt sich eine besonders frühe Ermittlung, insbesondere Abschätzung, des Reibwerts realisieren, sodass ein Bedarf an der Zuschaltung beziehungsweise Abschaltung des Vierradantriebs und somit der Bedarfszeitpunkt besonders frühzeitig ermittelt werden können. In der Folge kann hinreichend früh mit der Zuschaltung beziehungsweise Abschaltung des Vierradantriebs begonnen werden, sodass die Zuschaltung beziehungsweise Abschaltung spätestens zu dem Bedarfszeitpunkt vollständig abgeschlossen ist. Vorzugsweise ist die Teilmenge die zuvor genannte Teilanzahl.

Schließlich hat es sich als besonders vorteilhaft gezeigt, wenn der Bedarfszeitpunkt in Abhängigkeit von einem, insbesondere von dem Fahrer des Kraftfahrzeugs, eingestellten, Betriebszustand des Antriebsstrangs ermittelt wird beziehungsweise dass mit dem Umschalten in Abhängigkeit von dem Betriebszustand des Antriebsstrangs begonnen wird. Der Betriebszustand charakterisiert beispielsweise eine auf eine hohe Fahrdynamik ausgerichtete beziehungsweise eine besonders sportliche Einstellung des Antriebsstrangs, sodass auf Basis des aktuellen Betriebszustands besonders präzise rückgeschlossen werden kann, dass die Zuschaltung beziehungsweise Abschaltung des Vierradantriebs in naher Zukunft vorteilhaft sein könnte.

Alternativ oder zusätzlich ist es vorgesehen, dass der Bedarfszeitpunkt in Abhängigkeit von einem von dem Fahrer des Kraftfahrzeugs ausgewählten Fahrprofil ermittelt wird beziehungsweise dass mit dem Umschalten in Abhängigkeit von dem ausgewählten Fahrprofil begonnen wird. Der Antriebsstrang kann beispielsweise mehrere Fahrprofile wie "Normal" und/oder "Eco" und/oder "Sport" umfassen. Hat der Fahrer beispielsweise das Fahrprofil "Sport" ausgewählt, so wird der Bedarfszeitpunkt beispielsweise gegenüber dem Fahrprofil "Normal" früher ermittelt beziehungsweise der Bedarfszeitpunkt liegt dann früher, um eine hinreichend hohe Fahrdynamik sowie einen sicheren Betrieb gewährleisten zu können.

Alternativ oder zusätzlich ist es vorgesehen, dass der Bedarfszeitpunkt in Abhängigkeit von einem, insbesondere von dem Fahrer des Kraftfahrzeugs eingestellten, Zustand eines elektronischen Stabilitätsprogramms des Kraftfahrzeugs ermittelt wird beziehungsweise dass mit dem Umschalten in Abhängigkeit von dem Zustand des Stabilitätsprogramms begonnen wird. Hintergrund dieser Ausführungsform ist, dass der Fahrer beispielsweise das elektronische Stabilitätsprogramm (ESP) vollständig oder teilweise deaktivieren kann, insbesondere im Vergleich zu einem vollständig aktivierten Zustand des elektronischen Stabilitätsprogramms. Im Vergleich zu dem vollständig aktivierten Zustand kann der Bedarfszeitpunkt früher liegen, sodass mit dem Zuschalten des Vierradantriebs früher begonnen wird.

Alternativ oder zusätzlich ist es vorgesehen, dass der Bedarfszeitpunkt in Abhängigkeit von einem Anhängerbetrieb des Kraftfahrzeugs ermittelt wird beziehungsweise dass mit dem Umschalten in Abhängigkeit von dem Anhängerbetrieb begonnen wird. Der Anhängerbetrieb wird beispielsweise mittels einer Einrichtung des Kraftfahrzeugs ermittelt beziehungsweise erkannt. Unter dem Anhängerbetrieb ist zu verstehen, dass das Kraftfahrzeug mit einem Anhänger gekoppelt ist. Hintergrund dieser Ausführungsform ist, dass ein mit in dem Kraftfahrzeug gekoppelter Anhänger das Fahrverhalten des Kraftfahrzeugs beeinflussen kann, sodass dann beispielsweise im Vergleich zu einem Zustand, in welchem kein Anhänger mit dem Kraftfahrzeug gekoppelt ist, der Bedarfszeitpunkt früher ist.

Alternativ oder zusätzlich ist es vorgesehen, dass der Bedarfszeitpunkt in Abhängigkeit von einer von dem Fahrer bewirkten Veränderung einer Stellung eines Bedienelements ermittelt wird beziehungsweise dass mit dem Umschalten in Abhängigkeit von der von dem Fahrer bewirkten Veränderung der Stellung des Bedienelements begonnen wird, wobei mittels des beispielsweise als Pedal, insbesondere als Fahrpedal, ausgebildeten Bedienelements ein von der Antriebseinrichtung des Antriebsstrangs bereitstellendes Drehmoment durch den Fahrer einstellbar ist. Beispielsweise ist das Bedienelement ein Pedal, welches der Fahrer mit seinem Fuß betätigen kann.

Übersteigt beispielsweise die Veränderung der Stellung einen Grenzwert, sodass beispielsweise eine Geschwindigkeit, mit welcher das Bedienelement bewegt wird, den Grenzwert überschreitet, so bedeutet dies eine von dem Fahrer gewünschte abrupte Änderung des von der Antriebseinrichtung bereitzustellenden beziehungsweise bereitgestellten Drehmoments zum Antreiben des Kraftfahrzeugs. Eine solche, übermäßig abrupte Änderung des von der Antriebseinrichtung bereitgestellten Drehmoments kann zu ungünstigen Fahrsituationen führen, welche nun dadurch vermieden werden können, dass der Bedarfszeitpunkt in Abhängigkeit von der Veränderung der Stellung des Bedienelements ermittelt wird. In der Folge kann hinreichend früh von dem Zweiradantrieb zu dem Vierradantrieb umgeschaltet werden, um einen besonders sicheren und gleichzeitig dynamischen Betrieb des Kraftfahrzeugs zu gewährleisten.

Ein zweiter Aspekt der Erfindung betrifft einen Antriebsstrang für ein Kraftfahrzeug, wobei der Antriebsstrang zum Durchführen eines erfindungsgemäßen Verfahrens ausgebildet ist. Der Antriebsstrang weist dabei eine elektronische Recheneinrichtung auf, mittels welcher der Antriebsstrang zwischen einem ersten Betriebszustand, in welchem ein Zweiradantrieb des Antriebsstrangs aktiviert ist, und einem zweiten Betriebszustand, in welchem ein Vierradantrieb des Antriebsstrangs aktiviert ist, umschaltbar ist,

Um nun eine besonders vorteilhafte und insbesondere frühzeitige und bedarfsgerechte Umschaltung von einem der Betriebszustände zu dem jeweils anderen Betriebszustand realisieren zu können, ist die elektronische Recheneirichtung dazu ausgebildet, während einer Fahrt des Kraftfahrzeugs einen Bedarfszeitpunkt zu ermitteln, zu welchem das Umschalten von dem einen Betriebszustand zu dem anderen Betriebszustand spätestens, insbesondere vollständig, abgeschlossen sein muss, wobei der Bedarfszeitpunkt bezüglich des Ermittelns des Bedarfszeitpunkts in der Zukunft liegt.

Des Weiteren ist die elektronische Recheneinrichtung dazu ausgebildet, in Abhängigkeit von dem, insbesondere zuvor, ermittelten Bedarfszeitpunkt mit dem Umschalten von dem einen Betriebszustand zu dem anderen Betriebszustand zu einem den Bedarfszeitpunkt zeitlich vorweggehenden Startzeitpunkt derart zu beginnen, dass das Umschalten spätestens zu dem Bedarfszeitpunkt abgeschlossen ist.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig. 1: eine schematische Darstellung eines erfindungsgemäßen Antriebsstrangs;
- Fig. 2: ein Flussdiagramm zum Veranschaulichen eines erfindungsgemäßen Verfahrens; und
- Fig. 3: ein weiteres Diagramm zum Veranschaulichen des erfindungsgemäßen Verfahrens.

Bei dem im Folgenden erläuterten Ausführungsbeispiel handelt es sich um eine bevorzugte Ausführungsform der Erfindung.

In den Figuren sind funktionsgleiche Elemente jeweils mit denselben Bezugszeichen versehen.

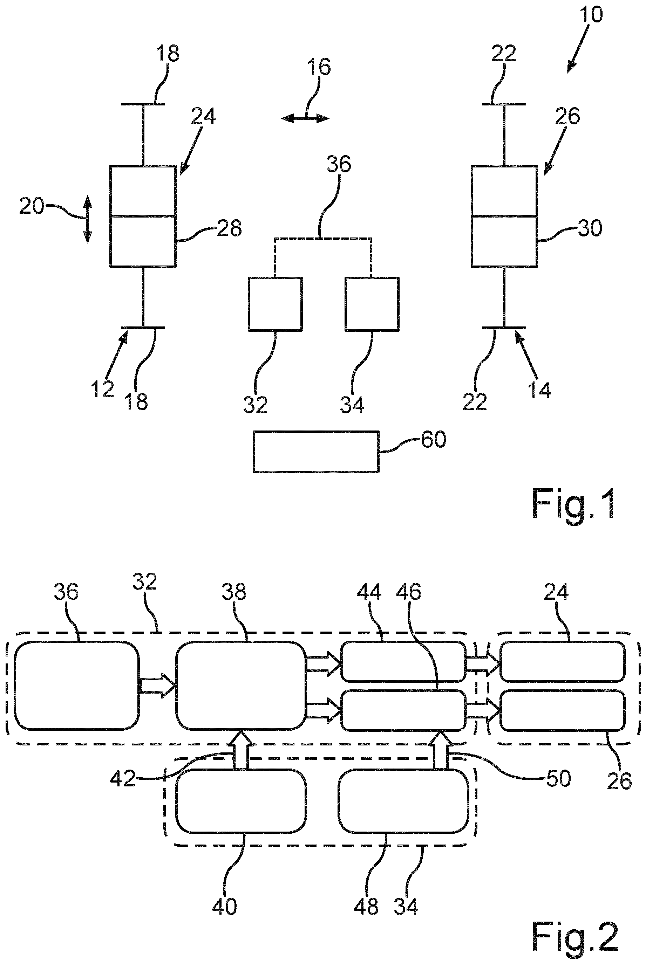

Fig. 1 zeigt in einer schematischen Darstellung einen Antriebsstrang 10 für ein als Kraftwagen, insbesondere Personenkraftwagen, ausgebildetes Kraftfahrzeug. Der Antriebsstrang 10 weist wenigstens oder genau zwei in Fahrzeuglängsrichtung hintereinander angeordnete und somit aufeinanderfolgende Achsen 12 und 14 auf, wobei die Achse 12 auch als erste Achse und die Achse 14 auch als zweite Achse bezeichnet wird. Dabei ist die Fahrzeuglängsrichtung in Fig. 1 durch einen Doppelpfeil 16 veranschaulicht. Die Achse 12 weist wenigstens oder genau zwei in Fahrzeugquerrichtung voneinander beabstandete erste Räder 18 auf, welche beispielsweise Vorderräder des Kraftfahrzeugs sind. Somit ist die Achse 12 beispielsweise eine Vorderachse des Kraftfahrzeugs. In Fig. 1 ist die Fahrzeugquerrichtung durch einen Doppelpfeil 20 veranschaulicht. Die Achse 14 weist wenigstens oder genau zwei zweite Räder 22 auf, welche in Fahrzeugquerrichtung voneinander beabstandet sind. Die Räder 22 sind beispielsweise Hinterräder des Kraftfahrzeugs, sodass die Achse 14 beispielsweise eine Hinterachse des Kraftfahrzeugs ist. Der Antriebsstrang 10 weist eine erste Antriebseinrichtung 24 auf, welche bezogen auf die Achsen 12 und 14 ausschließlich der Achse 12 zugeordnet ist. Somit ist die Antriebseinrichtung 24 bezogen auf die Räder 18 und 22 ausschließlich den Rädern 18 zugeordnet, sodass mittels der Antriebseinrichtung 24 bezogen auf die Achsen 12 und 14 ausschließlich die Achse 12 angetrieben werden kann. Mit anderen Worten sind mittels der Antriebseinrichtung 24 bezogen auf die Räder 18 und 22 ausschließlich die Räder 18 antreibbar, sodass die Antriebseinrichtung 24 bezogen auf die Räder 18 und 22 ausschließlich die Räder 18, nicht jedoch die Räder 22 antreiben kann. Der Antriebsstrang 10 umfasst darüber hinaus eine zweite Antriebseinrichtung 26, welche bezogen auf die Achsen 12 und 14 ausschließlich der Achse 14 zugeordnet ist. Dies bedeutet, dass die Antriebseinrichtung 26 bezogen auf die Räder 18 und 22 ausschließlich den Rädern 22 zugeordnet ist, sodass mittels der Antriebseinrichtung 26 bezogen auf die Räder 18 und 22 ausschließlich die Räder 22, nicht jedoch die Räder 18 angetrieben werden können.

Die jeweilige Antriebseinrichtung 24 beziehungsweise 26 kann wenigstens oder genau eine Verbrennungskraftmaschine aufweisen, mittels welcher die jeweiligen Räder 18 beziehungsweise 20 angetrieben werden können. Alternativ oder zusätzlich kann die jeweilige Antriebseinrichtung 24 beziehungsweise 26 wenigstens oder genau eine elektrische Maschine aufweisen, mittels welcher die jeweiligen Räder 18 beziehungsweise 22 elektrisch angetrieben werden können.

Bei dem in Fig. 1 gezeigten Ausführungsbeispiel weist die Antriebseinrichtung 24 wenigstens oder genau eine erste elektrische Maschine 28 auf, mittels welcher die Räder 18 elektrisch angetrieben werden können. Ferner weist die Antriebseinrichtung 26 wenigstens oder genau eine zweite elektrische Maschine 30 auf, mittels welcher die Räder 22 elektrisch angetrieben werden können. Vorzugsweise ist das Kraftfahrzeug als Elektrofahrzeug, insbesondere batterieelektrisches Fahrzeug (BEV), ausgebildet, sodass die Räder 18 und 22 ausschließlich elektrisch angetrieben werden können. Alternativ ist es denkbar, dass das Kraftfahrzeug als ein Hybridfahrzeug, insbesondere als ein Plug-In-Hybrid, ausgebildet ist. Die Achsen 12 und 14 sind dabei mechanisch voneinander entkoppelt und somit nicht drehmomentübertragend miteinander gekoppelt, sodass eine mechanische, drehmomentübertragende Kopplung der Achsen 12 und 14 unterbleibt.

Um beispielsweise die jeweiligen Räder 18 beziehungsweise 22 mittels der jeweiligen elektrischen Maschine 28 beziehungsweise 30 elektrisch anzutreiben, wird die jeweilige elektrische Maschine in einem Motorbetrieb und somit als Elektromotor betrieben. Dann befindet sich die jeweilige elektrische Maschine 28 beziehungsweise 30 in einem Zugbetrieb. Mit anderen Worten, um die jeweiligen Räder 18 beziehungsweise 22 mittels der jeweiligen Antriebseinrichtung 24 beziehungsweise 26 anzutreiben, wird ein jeweiliger Zugbetrieb der jeweiligen Antriebseinrichtung 24 beziehungsweise 26 eingestellt, sodass in dem Zugbetrieb die jeweiligen Räder 18 beziehungsweise 22 von der jeweiligen Antriebseinrichtung 24 beziehungsweise 26 angetrieben werden. Ferner ist ein auch als Schleppbetrieb bezeichneter Schubbetrieb der jeweiligen Antriebseinrichtung 24 beziehungsweise 26 denkbar. In dem jeweiligen Schubbetrieb wird die jeweilige Antriebseinrichtung 24 beziehungsweise 26 von den jeweiligen Rädern 18 und 22 und somit beispielsweise von kinetischer Energie des sich bewegenden Kraftfahrzeugs angetrieben. Durch den jeweiligen Schubbetrieb werden die jeweiligen Räder 18 beziehungsweise 22 gebremst und somit verlangsamt oder an einer Beschleunigung gehindert.

Der Antriebsstrang 10 umfasst darüber hinaus ein erstes elektronisches Steuergerät 32, welches auch als Antriebssteuergerät (ASG) bezeichnet wird. Mittels des Steuergeräts 32 sind die Antriebseinrichtungen 24 und 26 ansteuerbar, um dadurch ein jeweiliges, von der jeweiligen Antriebseinrichtung 24 beziehungsweise 26 bereitzustellendes und auch als Einzeldrehmoment bezeichnetes Drehmoment zum Antreiben des jeweiligen Rads 18 beziehungsweise 22 einzustellen.

Der Antriebsstrang 10 umfasst darüber hinaus ein zusätzlich zu dem Steuergerät 32 vorgesehenes und separat von dem Steuergerät 32 ausgebildetes zweites elektronisches Steuergerät 34, mittels welchem beispielsweise wenigstens ein Bremsmoment zum Abbremsen des Kraftfahrzeugs einstellbar ist. Das Bremsmoment ist beispielsweise ein auch als Schubmoment bezeichnetes Schleppmoment der jeweiligen Antriebseinrichtung 24 beziehungsweise 26, wobei das Schleppmoment beispielsweise in dem Schubbetrieb von der jeweiligen Antriebseinrichtung 24 beziehungsweise 26 aufgenommen wird, um die jeweilige Antriebseinrichtung 24 beziehungsweise 26 in dem Schubbetrieb anzutreiben. Insbesondere ist mittels des Steuergeräts 34 eine Betriebsbremse des Antriebstrangs ansteuerbar. Aus Fig. 1 ist erkennbar, dass die Steuergeräte 32 und 34 separate Einheiten sind.

Um nun eine besonders vorteilhafte, kosten-, bauraum- und gewichtsgünstige Drehmomentenaufteilung auf die Antriebseinrichtungen 24 und 26 und somit auf die Achsen 12 und 14 realisieren zu können, wird bei einem Verfahren zum Betreiben des Antriebsstrangs 10 mittels des Steuergeräts 34, welches auch als Bremsensteuergerät bezeichnet wird, ein von dem Fahrer des Kraftfahrzeugs angefordertes und von den Antriebseinrichtungen 24 und 26 zusammen beziehungsweise in Summe bereitzustellendes Gesamtdrehmoment auf die Antriebseinrichtungen 24 und 26 ermittelt. Beispielsweise im Rahmen einer Fahrerwunschermittlung wird das von dem Fahrer angeforderte und somit gewünschte Gesamtdrehmoment ermittelt. Unter der Aufteilung des Gesamtdrehmoments auf die Antriebseinrichtungen 24 und 26 und somit auf die Achsen 12 und 14 ist beispielsweise zu verstehen, dass das Bremsensteuergerät ein von der Antriebseinrichtung 24 bereitzustellendes erstes Teildrehmoment und ein von der Antriebseinrichtung 26 bereitzustellendes zweites Teildrehmoment ermittelt, insbesondere berechnet, wobei die Teildrehmomente in Summe das gesamte Drehmoment ergeben. Die Teildrehmomente können die zuvor genannten Einzeldrehmomente sein, sodass dann, wenn die Antriebseinrichtungen 24 und 26 Teildrehmomente beziehungsweise die Einzeldrehmomente, insbesondere gleichzeitig, bereitstellen, das von dem Fahrer gewünschte Gesamtmoment insgesamt bereitgestellt wird. Das von dem Fahrer angeforderte Gesamtmoment ist somit ein auch als Fahrerwunsch bezeichneter Wunsch des Fahrers im Hinblick auf eine durch die Antriebseinrichtungen 24 und 26 zu bewirkende Bereitstellung des gesamten Drehmoments. Das jeweilige Teildrehmoment kann Null, kleiner als Null oder größer als Null sein, wobei das von dem Fahrer angeforderte Gesamtdrehmoment größer oder kleiner als Null oder aber Null ist.

Bei dem Verfahren stellt das Steuergerät 34 beispielsweise über ein in Fig. 1 besonders schematisch dargestelltes Bordnetz 36 ein elektrisches Aufteilungssignal bereit, welches die von dem Steuergerät 34 ermittelte Aufteilung charakterisiert. Über das Bordnetz 36 wird das Aufteilungssignal von dem Steuergerät 34 an das Steuergerät 32 übermittelt, sodass das Steuergerät 32 über das Bordnetz 36 das Aufteilungssignal empfängt. In Abhängigkeit von dem empfangenen Aufteilungssignal steuert das Steuergerät 32 die Antriebseinrichtungen 24 und 26 derart an, dass die Einzeldrehmomente von den Antriebseinrichtungen 24 und 26, insbesondere gleichzeitig, bereitgestellt werden und in Summe dem Gesamtdrehmoment entsprechen. Das jeweilige Einzeldrehmoment kann Null entsprechen, größer als Null oder kleiner als Null sein, wobei insbesondere dann, wenn eines der Einzeldrehmomente Null ist, das andere Einzeldrehmoment größer oder kleiner als Null ist. Vorzugsweise ist das Gesamtdrehmoment ein von Null unterschiedliches Drehmoment. Ist das jeweilige Einzeldrehmoment größer als Null, so ist das jeweilige Einzeldrehmoment beispielsweise ein Zugmoment, sodass die Antriebseinrichtung 24 beziehungsweise 26, welche das Zugmoment bereitstellt, im Zugbetrieb betrieben wird. Ist das jeweilige Einzeldrehmoment kleiner als Null, so ist das jeweilige Einzeldrehmoment beispielsweise ein Rekuperations- oder Brems- oder Schleppmoment, sodass beispielsweise die Antriebseinrichtung 24 beziehungsweise 26, welche das auch als Schleppmoment bezeichnete Schubmoment bereitstellt, in dem Schubbetrieb betrieben und dabei beispielsweise von den Rädern 18 beziehungsweise 22 der Achse 12 beziehungsweise 14 angetrieben wird, der die jeweilige Antriebseinrichtung 24 beziehungsweise 26 zugeordnet ist.

Bei dem Schubbetrieb kann es sich insbesondere um einen Rekuperationsbetrieb der jeweiligen elektrischen Maschine 28 beziehungsweise 30 handeln. In dem Rekuperationsbetrieb wird die elektrische Maschine 28 beziehungsweise 30 als ein Generator betrieben, welcher von den Rädern 18 beziehungsweise 22 angetrieben wird. Mittels des Generators wird somit kinetische Energie des Kraftfahrzeugs in elektrische Energie umgewandelt, welche von dem Generator bereitgestellt wird. Die von dem Generator bereitgestellte elektrische Energie kann beispielsweise in einer zum Speichern von elektrischer Energie ausgebildeten Speichereinrichtung gespeichert werden. Die Speichereinrichtung kann beispielsweise als Batterie, insbesondere als Hochvolt-Batterie, ausgebildet sein.

Fig. 2 zeigt ein Flussdiagramm, anhand dessen das Verfahren näher veranschaulicht wird. Ein Block 36 in Fig. 2 veranschaulicht beispielsweise, dass das Steuergerät 32 (Antriebssteuergerät) das von dem Fahrer angeforderte und somit gewünschte Gesamtdrehmoment insbesondere im Rahmen der Fahrerwunschermittlung ermittelt. Ein Block 38 veranschaulicht, dass beispielsweise mittels des Antriebssteuergeräts (Steuergerät 32) eine von der zuvor beschriebenen Aufteilung unterschiedliche zweite Aufteilung des von dem Fahrer des Kraftfahrzeugs angeforderten Gesamtdrehmoments auf die Antriebseinrichtungen 24 und 26 und somit auf die Achsen 12 und 14 ermittelt wird, insbesondere im Rahmen einer Längsverteilungsbetriebsstrategie. Die zweite Aufteilung ist somit beispielsweise ein Vorschlag, welcher für die Aufteilung des Gesamtdrehmoments auf die Achsen 12 und 14 von dem Steuergerät 32 gemacht wird. Beispielsweise schlägt das Antriebssteuergerät die zweite Aufteilung im Hinblick auf einen möglichst effizienten und somit energieverbrauchsarmen Betrieb des Kraftfahrzeugs vor. Das Bremsensteuergerät (Steuergerät 34) ermittelt beispielsweise die erste Aufteilung im Hinblick auf eine möglichst hohe Fahrdynamik des Kraftfahrzeugs. Die erste Aufteilung, die mittels des Bremsensteuergeräts ermittelt, insbesondere berechnet, wird, ist in Fig. 2 durch einen Block 40 veranschaulicht. Dabei veranschaulicht ein Pfeil 42, dass die erste Aufteilung die zweite Aufteilung überstimmt beziehungsweise ersetzt und dass das Aufteilungssignal von dem Bremsensteuergerät an das Antriebssteuergerät übermittelt wird. Die durch das Bremsensteuergerät ermittelte erste Aufteilung wird somit unter Vermittlung des Antriebssteuergeräts durch die Antriebseinrichtungen 24 und 26 umgesetzt, da nicht etwa das Bremsensteuergerät die Antriebseinrichtungen 24 und 26 ansteuert, sondern das Antriebssteuergerät setzt die durch das Bremsensteuergerät ermittelte erste Aufteilung um, indem das Antriebssteuergerät und nicht das Bremsensteuergerät die Antriebseinrichtungen 24 und 26 ansteuert.

Der elektrischen Maschine 28 ist beispielsweise ein erste Leistungselektronik zugeordnet, wobei der elektrischen Maschine 30 beispielsweise eine zweite Leistungselektronik zugeordnet ist. Um die durch das Bremsensteuergerät ermittelte Aufteilung des Gesamtdrehmoments auf die Achsen 12 und 14 umzusetzen, werden die Leistungselektroniken durch das Antriebssteuergerät angesteuert. In der Folge stellen die Antriebseinrichtungen 24 und 26, insbesondere die elektrischen Maschinen 28 und 30, die jeweiligen Einzeldrehmomente bereit, welche in Summe dem Gesamtdrehmoment entsprechen beziehungsweise das Gesamtdrehmoment ergeben. Diesbezüglich veranschaulichen in Fig. 2 Blöcke 44 und 46 sogenannte Momentenpfade, über welche die Einzeldrehmomente durch das Ansteuern der elektrischen Maschinen 28 und 30 schließlich umgesetzt werden, wobei das Ansteuern der elektrischen Maschinen 28 und 30 durch das Antriebssteuergerät bewirkt wird beziehungswiese wurde. Außerdem veranschaulicht in Fig. 2 ein Block 48 Momenteneingriffe, welche durch das Bremsensteuergerät (Steuergerät 34) gegebenenfalls durchgeführt werden. Aus Fig. 2 ist anhand eines Pfeils 50 erkennbar, dass das Bremsensteuergerät über die Momenteneingriffe in die Momentenpfade, über welche das Antriebssteuergerät die erste Aufteilung umsetzt, eingreift, um dadurch eine besonders vorteilhafte Aufteilung des Raddrehmoments auf die Achsen 12 und 14 zu realisieren.

Die erste Aufteilung ist somit im Hinblick auf die zweite Aufteilung eine Umverteilung, da der Vorschlag des Antriebssteuergeräts durch die erste Aufteilung überstimmt beziehungsweise ersetzt wird. Da mittels des Bremsensteuergeräts beispielsweise auch das Bremsmoment einstellbar ist beziehungsweise eingestellt wird und/oder mittels des Bremsensteuergeräts beispielsweise die Betriebsbremse des Kraftfahrzeugs ansteuerbar beziehungsweise betätigbar ist oder angesteuert beziehungsweise betätigt wird, und da die erste Aufteilung durch das Bremsensteuergerät durchgeführt wird, ist ein gesamtheitlicher Ansatz geschaffen, wodurch das Gesamtdrehmoment kosten-, bauraum- und gewichtsgünstig auf die Achsen 12 und 14 aufgeteilt werden kann. Da das Gesamtdrehmoment auf die Achsen 12 und 14 aufgeteilt wird, wird das Gesamtdrehmoment in Fahrzeuglängsrichtung aufgeteilt, sodass eine Längsverteilung des Gesamtdrehmoments vorgesehen ist. Die Antriebseinrichtungen 24 und 26 sind dabei achsindividuelle Motoren, zwischen welchen keine mechanische Kopplung besteht. Die Steuergeräte 32 und 34 sorgen diesbezüglich für eine quasi virtuelle Kopplung der Achsen 12 und 14, da das Gesamtdrehmoment in Summe durch die Antriebseinrichtungen 24 und 26 bereitgestellt wird. Vorzugsweise werden von dem Bremsensteuergerät auch eine Antriebs-Schlupf-Regelung und eine Schubmomenten-Regelung der jeweiligen Antriebseinrichtungen 24 und 26 durchgeführt, wodurch der gesamtheitliche Ansatz innerhalb des Bremsensteuergeräts besonders vorteilhaft zum Tragen kommt.

Durch die beschriebene Aufteilung des Gesamtdrehmoments durch das Bremsensteuergerät und somit durch den gesamtheitlichen Ansatz kann eine Vierrad- beziehungsweise Allradverteilung den Ansatz einer maximalen Längsdynamik beziehungsweise einer maximalen Traktion verfolgen, sodass dann und vorzugsweise nur dann, wenn es beispielsweise durch einen entsprechenden Wunsch des Fahrers erforderlich ist, von einem Zweiradantrieb auf einen Allrad- beziehungsweise Vierradantrieb des Antriebsstrangs 10 umgeschaltet werden kann. Ansonsten kann der Antriebsstrang 10 mit dem Zweiradantrieb betrieben werden, wodurch der Energieverbrauch besonders gering gehalten werden kann.

Durch den Vierradantrieb kann ein besonders dynamischer und sicherer Betrieb gewährleistet werden. Insbesondere ist es möglich, dass in zumindest nahezu jeder Fahrsituation dem Wunsch des Fahrers im Hinblick auf die durch den Antriebsstrang 10 zu bewirkende Bereitstellung des von dem Fahrer gewünschten Gesamtdrehmoments entsprochen werden kann. Dies wirkt sich positiv sowohl auf die Traktion und somit auf die Sicherheit als auch auf die Fahrdynamik des Kraftfahrzeugs aus. Mit anderen Worten kann in zumindest nahezu jeder Fahrsituation eine besonders hohe Traktion bei besonders vorteilhafter Fahrdynamik gewährleistet werden.

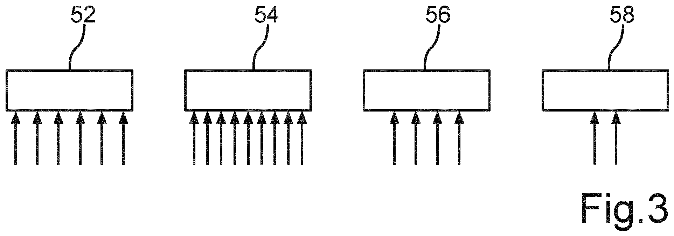

Fig. 3 zeigt ein weiteres Diagramm zum Veranschaulichen des Verfahrens und des Antriebsstrangs 10. In Fig. 3 veranschaulicht ein Block 52 eine Prädiktion im Hinblick auf ein Umschalten von dem Zweiradantrieb zu dem oder auf den Vierrad- oder Allradantrieb. Unter dem Zweiradantrieb ist beispielsweise zu verstehen, dass bezogen auf die Räder 18 und 22 lediglich die Räder 18 oder lediglich die Räder 22 angetrieben werden. Somit kann beispielsweise während einer ersten Zeitspanne der Zweiradantrieb eingestellt sein. Unter dem Vierrad- oder Allradantrieb ist zu verstehen, dass beispielsweise während einer von der ersten Zeitspanne unterschiedlichen zweiten Zeitspanne sowohl die Räder 18 als auch die Räder 22, insbesondere gleichzeitig, angetrieben werden. Wird beispielsweise von dem Zweiradantrieb auf den Allrad- oder Vierradantrieb umgeschaltet, so wird sozusagen der Vierrad- oder Allradantrieb zugeschaltet. Der Block 52 veranschaulicht dabei eine prädiktive Zuschaltung des Allrad- oder Vierradantriebs, welcher im Folgenden der Einfachheit wegen einfach auch als Allradantrieb bezeichnet wird.

Unter der prädiktiven Zuschaltung des Allradantriebs ist Folgendes zu verstehen: Zwischen einem Startzeitpunkt, zu welchem mit der Zuschaltung des zunächst noch deaktivierten Allradantriebs begonnen wird, und einem Betriebszeitpunkt, zu welchem die Zuschaltung des Allradantriebs, insbesondere vollständig abgeschlossen ist, wobei der Betriebszeitpunkt auf den Startzeitpunkt folgt, liegt üblicherweise eine auch als Rüstzeit bezeichnete Zuschaltzeit, welche für die Zuschaltung des Allradantriebs erforderlich ist. Im Hinblick auf die elektrische Maschine 28 und 30 ist die Rüstzeit beispielsweise erforderlich, da beispielsweise bei dem Zweiradantrieb zunächst die elektrische Maschine 28 deaktiviert ist. Dies bedeutet, dass vor dem Startzeitpunkt beziehungsweise während des Zweiradantriebs die elektrische Maschine 28 zunächst noch unbestromt ist. Die elektrische Maschine 28 beziehungsweise 30 benötigt dabei ausgehend von dem unbestromten Zustand die Rüstzeit, bis die elektrische Maschine 28 beziehungsweise 30 ein Drehmoment bereitstellen und somit auf die Räder 18 beziehungsweise 22 ausüben kann. Dies liegt an dem Feldaufbau der beispielsweise als Asynchronmaschine ausgebildeten elektrischen Maschine 28 beziehungsweise 30. Mit anderen Worten benötigt die elektrische Maschine 28 beziehungsweise 30 ausgehend von ihrem unbestromten Zustand die Rüstzeit, bis die elektrische Maschine 28 beziehungsweise 30 ein gewünschtes Drehmoment in Form des jeweiligen Einzel- oder Teildrehmoments bereitstellen kann. Wird somit die zunächst unbestromte elektrische Maschine 28 zu dem Startzeitpunkt aktiviert, das heißt bestromt, so kann die elektrische Maschine 28 erst nach der Rüstzeit und somit zu dem Betriebszeitpunkt ein gewünschtes Drehmoment durch das Bestromen bereitstellen.

Im Rahmen der prädiktiven, das heißt vorausschauenden Zuschaltung des Allradantriebs wird somit beispielsweise mittels des Bremsensteuergeräts ein Bedarfszeitpunkt ermittelt, an welchem die Zuschaltung des Vierradantriebs, insbesondere vollständig und/oder spätestens, abgeschlossen sein muss, wobei der Bedarfszeitpunkt bezüglich des Ermittelns des Bedarfszeitpunkts in der Zukunft liegt. Dies bedeutet beispielsweise, dass der Bedarfszeitpunkt während eines Zeitintervalls ermittelt wird, wobei der Bedarfszeitpunkt zeitlich auf das Zeitintervall folgt und somit bezüglich des Zeitintervalls in der Zukunft liegt und von dem Zeitintervall zeitlich beabstandet ist.

In Abhängigkeit von dem ermittelten Bedarfszeitpunkt wird zu dem Startzeitpunkt mit dem Zuschalten des Allradantriebs, das heißt beispielsweise mit dem Bestromen der elektrischen Maschine 28, begonnen, insbesondere in Abhängigkeit von der ermittelten Aufteilung, wobei der Startzeitpunkt dem Bedarfszeitpunkt zeitlich vorweggeht. Der Bedarfszeitpunkt kann beispielsweise mit dem Betriebszeitpunkt zusammenfallen oder der Bedarfszeitpunkt folgt zeitlich auf den Betriebszeitpunkt, sodass der Allradantrieb spätestens zu dem Bedarfszeitpunkt vollständig zugeschaltet ist, insbesondere ausgehend von dem Zweiradantrieb. Mit anderen Worten wird in Abhängigkeit von dem Bedarfszeitpunkt und vorzugsweise in Abhängigkeit von der ermittelten Aufteilung zu dem Startzeitpunkt derart mit dem Zuschalten des Allradantriebs begonnen, dass das Zuschalten des Allradantriebs, insbesondere vollständig, spätestens zu dem Bedarfszeitpunkt abgeschlossen ist.

Diese prädiktive Zuschaltung des Allradantriebs erfolgt beispielsweise durch eine möglichst frühe Reibwertabschätzung an den angetriebenen Rädern 18 beziehungsweise 22, das heißt an denjenigen der Räder 18 und 22, welche, insbesondere bei aktiviertem Zweiradantrieb, angetrieben werden. Dies ist von Vorteil, da die jeweils anderen Räder 22 beziehungsweise 18, die erst noch zugeschaltet werden und dadurch zu angetriebenen Rädern werden, in deaktiviertem Zustand des Vierradantriebs beziehungsweise bei aktiviertem Zweiradantrieb zumindest nahezu kräftefrei sind. Das Verfahren wird während einer Fahrt des Kraftfahrzeugs durchgeführt, welches während der Fahrt entlang einer Fahrbahn fährt und somit in Fahrzeughochrichtung nach unten über die Räder 18 und 22 an der Fahrbahn abgestützt ist. Unter der Reibwertabschätzung ist eine Ermittlung, insbesondere eine Abschätzung, eines Reibwerts zu verstehen, welcher eine Reibung zwischen dem jeweiligen angetriebenen Rad 18 bzw. 22 und der Fahrbahn charakterisiert. Da vorliegend beispielsweise durch Zuschalten des Allradantriebs die Achse 12 zu der Achse 14 zugeschaltet wird, sodass während des Zweiradantriebs die Hinterräder angetrieben werden beziehungsweise wurden, erfolgt die prädiktive Zuschaltung des Allradantriebs beispielsweise durch eine möglichst frühe Reibwertabschätzung an der Hinterachse und somit an den Rädern 22.

Außerdem ist es vorzugsweise vorgesehen, dass der Allradantrieb in Abhängigkeit von einem von dem Fahrer ausgewählten Fahrprofil und/oder in Abhängigkeit von einem von dem Fahrer ausgewählten Betriebszustand des Antriebsstrangs 10 und/oder in Abhängigkeit von einem von dem Fahrer ausgewählten Zustand eines elektronischen Stabilitätsprogramms und/oder in Abhängigkeit davon, ob das Kraftfahrzeug mit einem Anhänger gekoppelt ist, und/oder in Abhängigkeit von einer von dem Fahrer bewirkten Veränderung einer Stellung eines Bedienelements durchgeführt wird. Das Bedienelement ist dabei im Innenraum des Kraftfahrzeugs angeordnet und zum Anfordern beziehungsweise Einstellen des Gesamtdrehmoments durch den Fahrer betätigbar, insbesondere bewegbar. Hierdurch kann ein besonders effizienter Betrieb ohne nennenswerte Traktionsnachteile realisiert werden. Mit anderen Worten ist es einerseits möglich, solange wie möglich den Zweiradbetrieb beizubehalten. Hierdurch kann ein besonders effizienter Betrieb gewährleistet werden. Andererseits kann der Allradantrieb dann und vorzugsweise nur dann, insbesondere prädiktiv, zugeschaltet werden, wenn dies gewünscht beziehungsweise erforderlich ist.

Darüber hinaus veranschaulicht in Fig. 3 ein Block 54 eine sogenannte Grundverteilung, welche mittels des Bremsensteuergeräts durchgeführt wird. Das Bremsensteuergerät geht beispielsweise von der Grundverteilung aus und führt dann eine durch einen Block 56 veranschaulichte Umverteilung durch, durch welche die Grundverteilung geändert wird. Das Aufteilungssignal charakterisiert dann beispielsweise die Umverteilung, sodass die Umverteilung beispielsweise die erste Aufteilung ist. Die Grundverteilung erfolgt beispielsweise in Abhängigkeit von gelernten Reibwerten und/oder von Geschwindigkeiten und/oder Beschleunigungen in Fahrzeuglängsrichtung und/oder in Abhängigkeit von einem geschätzten Gewicht des Kraftfahrzeugs und/oder von einer Fahrprofilauswahl und/oder von einem von dem Fahrer eingestellten Betriebszustand des Antriebsstrangs 10 und/oder in Abhängigkeit von einem von dem Fahrer eingestellten Zustand des elektronischen Stabilitätsprogramms und/oder in Abhängigkeit von einem Anhängerbetrieb und/oder in Abhängigkeit von der Veränderung der Stellung des Fahrpedals und/oder in Abhängigkeit von einem eigenen Lenkverhalten des Kraftfahrzeugs. Die Umverteilung erfolgt beispielsweise in Abhängigkeit von Fahrdynamikparametern, welche eine Fahrdynamik des Kraftfahrzeugs charakterisieren.

Schließlich ist in Fig. 3 durch einen Block 58 eine auch als Limitierung oder Achslimitierung bezeichnete Begrenzung veranschaulicht. Die Achslimitierung erfolgt beispielsweise in Abhängigkeit von verfügbaren Achsmomenten und/oder in Abhängigkeit von einem Gradient einer Vorgabe. Unter der Achslimitierung ist zu verstehen, dass das Bremsensteuergerät beispielsweise zumindest eines der Einzeldrehmomente während wenigstens einer ersten Zeitspanne auf einen maximalen ersten Wert limitiert, welcher gegenüber einem von dem Bremsensteuergerät während einer von der ersten Zeitspanne unterschiedlichen zweiten Zeitspanne zugelassenen maximalen zweiten Wert des zumindest einen Einzeldrehmoments geringer ist. Beispielsweise ist es jedoch durch die erste Aufteilung möglich, ein Limitierungsdrehmoment, um welches das zumindest eine Einzeldrehmoment während der ersten Zeitspanne im Vergleich zur zweiten Zeitspanne limitiert und somit verringert wird oder ist, auf die jeweils andere Achse zu schieben beziehungsweise zu verteilen, sodass insgesamt durch die Antriebseinrichtungen 24 und 26 das vom Fahrer gewünschte Gesamtdrehmoment bereitgestellt werden kann. Hierdurch kann einerseits ein besonders dynamischer Betrieb und andererseits ein besonders sicherer Betrieb des Kraftfahrzeugs gewährleistet werden.

Insgesamt ist erkennbar, dass der Antriebstrang 10 zwischen einem ersten Betriebszustand, in welchem der Zweiradantrieb des Antriebsstrangs 10 aktiviert ist, und einem zweiten Betriebszustand, in welchem der Vierradantrieb des Antriebsstrangs 10 aktiviert ist, umschaltbar ist. Um dabei außerdem besonders bedarfsgerecht und frühzeitig von einem der Betriebszustände in den anderen Betriebszustand und dabei beispielsweise von dem Zweiradantrieb zu dem Vierradantrieb umschalten zu können, ist es bei dem Verfahren zum Betreiben des Antriebsstrangs 10 vorgesehen, dass während einer oder der Fahrt des Kraftfahrzeugs mittels einer in Fig. 1 besonders schematisch dargestellten elektronischen Recheneinrichtung 60 des Antriebsstrangs 10 ein oder der zuvor genannte Bedarfszeitpunkt ermittelt wird, zu welchem das Umschalten von dem einen Betriebszustand zu dem anderen Betriebszustand spätestens abgeschlossen sein muss. Dabei liegt der Bedarfszeitpunkt bezüglich des Ermittelns des Bedarfszeitpunkts in der Zukunft. Die Recheneinrichtung 60 kann eines der Steuergeräte 32 und 34 sein oder die Recheneinrichtung 60 umfasst das Steuergerät 32 und/oder das Steuergerät 34.

Des Weiteren wird in Abhängigkeit von dem ermittelten Bedarfszeitpunkt mit dem Umschalten von dem einen Betriebszustand zu dem anderen Betriebszustand zu einem dem Bedarfszeitpunkt zeitlich vorweggehenden Startzeitpunkt derart begonnen, dass das Umschalten spätestens zu dem Bedarfszeitpunkt abgeschlossen ist. Hierdurch ist es einerseits möglich, den Antriebsstrang 10 besonders umfangreiche Teile seiner gesamten Betriebszeit mit dem Zweiradantrieb zu betreiben, sodass ein besonders effizienter und somit wirkungsgradgünstiger und energieverbrauchsarmer Betrieb des Antriebsstrangs 10 und somit des Kraftfahrzeugs insgesamt realisiert werden kann. Zum anderen kann dann und vorzugsweise nur dann von dem Zweiradantrieb zu dem Vierradantrieb umgeschaltet werden, wenn dies beispielsweise mittels der elektronischen Recheneinrichtung 60 als vorteilhaft ermittelt, insbesondere eingeschätzt, wurde. Dabei ermöglicht das Verfahren eine besonders frühzeitige Zuschaltung des Vierradantriebs, sodass der Vierradantrieb dann vollständig zugeschaltet ist, wenn dies erforderlich ist. Dies ist spätestens zu dem Bedarfszeitpunkt erforderlich beziehungsweise mittels der Recheneinrichtung 60 wird oder wurde ermittelt, dass spätestens zu dem Bedarfszeitpunkt die vollständige Zuschaltung des Vierradantriebs insbesondere im Hinblick auf einen sicheren und/oder dynamischen Fahrzustand vorteilhaft beziehungsweise gegenüber dem Zweiradantrieb vorteilhafter ist. Das Verfahren ermöglicht eine besonders hohe Effizienz ohne Traktionsnachteile. Insbesondere ist es mittels des Verfahrens möglich, den Zweiradantrieb so lange wie möglich aufrechtzuerhalten und den Vierradantrieb nur so lange wie nötig zu nutzen.

### Bezugszeichenliste

- 10: Antriebsstrang
- 12: Achse
- 14: Achse
- 16: Doppelpfeil
- 18: Rad
- 20: Doppelpfeil
- 22: Rad
- 24: Antriebseinrichtung
- 26: Antriebseinrichtung
- 28: elektrische Maschine
- 30: elektrische Maschine
- 32: Steuergerät
- 34: Steuergerät
- 36: Bord netz
- 38: Block
- 40: Block
- 42: Pfeil
- 44: Block
- 46: Block
- 48: Block
- 50: Pfeil
- 52: Block
- 54: Block
- 56: Block
- 58: Block
- 60: elektronische Recheneinrichtung

## Patentansprüche

1. Verfahren zum Betreiben eines Antriebsstrangs (10) eines Kraftfahrzeugs, bei welchem der Antriebsstrang (10) zwischen einem ersten Betriebszustand, in welchem ein Zweiradantrieb des Antriebsstrangs (10) aktiviert ist, und einem zweiten Betriebszustand, in welchem ein Vierradantrieb des Antriebsstrangs (10) aktiviert ist, umschaltbar ist, wobei der Antriebsstrang (10) mittels einer elektronischen Recheneinrichtung (60) von einem der Betriebszustände in den anderen Betriebszustand umgeschaltet wird, wobei:
- während einer Fahrt des Kraftfahrzeugs mittels der elektronischen Recheneinrichtung (60) ein Bedarfszeitpunkt ermittelt wird, zu welchem das Umschalten von dem einen Betriebszustand zu dem anderen Betriebszustand spätestens abgeschlossen sein muss, wobei der Bedarfszeitpunkt bezüglich des Ermittelns des Bedarfszeitpunkts in der Zukunft liegt; und
- in Abhängigkeit von dem ermittelten Bedarfszeitpunkt mit dem Umschalten von dem einen Betriebszustand zu dem anderen Betriebszustand zu einem dem Bedarfszeitpunkt zeitlich vorweggehenden Startzeitpunkt derart begonnen wird, dass das Umschalten spätestens zu dem Bedarfszeitpunkt abgeschlossen ist,
**dadurch gekennzeichnet, dass**
- der Bedarfszeitpunkt in Abhängigkeit von einem Reibwert ermittelt wird, welcher zumindest eine Reibung zwischen wenigstens einem Rad (18, 22) des (10) Antriebsstrangs und einer Fahrbahn, entlang welcher das Kraftfahrzeug fährt, charakterisiert, und
- eine eine Drehzahl des Rads (18, 22) charakterisierende Messgröße mittels wenigstens eines Sensors erfasst wird, welcher wenigstens ein die Messgröße charakterisierendes elektrisches Signal bereitstellt, welches eine Anzahl an Signalflanken aufweist, auf deren Basis die Drehzahl ermittelbar ist, wobei die Anzahl mindestens 80, insbesondere mindestens 90, beträgt.

2. Verfahren nach Anspruch 1,
wobei mit dem Umschalten in Abhängigkeit von einer Umschaltzeitspanne begonnen wird, die der Antriebsstrang (10) für das Umschalten benötigt.

3. Verfahren nach Anspruch 2,
wobei die Umschaltzeitspanne mittels der elektronischen Recheneinrichtung (60) berechnet wird.

4. Verfahren nach einem der vorhergehenden Ansprüche,
wobei die Umschaltzeitspanne in Abhängigkeit von wenigstens einem Wert ermittelt wird, welcher in einem Speicher gespeichert ist und aus dem Speicher abgerufen wird.

5. Verfahren nach Anspruch 1,
wobei der Reibwert eine aktuelle Reibung zwischen dem Rad (18, 22) und der Fahrbahn und/oder eine bezüglich des Ermittelns des Reibwerts in der Zukunft liegende Reibung zwischen dem Rad (18, 22) und der Fahrbahn charakterisiert.

6. Verfahren nach Anspruch 1,
wobei die Drehzahl in Abhängigkeit von einer Teilmenge der Signalflanken ermittelt wird, wobei die Teilmenge größer als 1, insbesondere größer als 3, und geringer als die Anzahl ist und/oder wobei die Teilmenge geringer als 10, insbesondere geringer als 5, ist.

7. Verfahren nach einem der vorhergehenden Ansprüche,
wobei der Bedarfszeitpunkt in Abhängigkeit von einem, insbesondere von dem Fahrer des Kraftfahrzeugs eingestellten, Betriebszustand des Antriebsstrangs (10) und/oder in Abhängigkeit von einem von dem Fahrer des Kraftfahrzeugs ausgewählten Fahrprofil und/oder in Abhängigkeit von einem, insbesondere von dem Fahrer des Kraftfahrzeugs eingestellten, Zustand eines elektronischen Stabilitätsprogramms des Kraftfahrzeugs und/oder in Abhängigkeit von einem Anhängerbetrieb des Kraftfahrzeugs und/oder in Abhängigkeit von einer von dem Fahrer bewirkten Veränderung einer Stellung eines Bedienelements ermittelt wird, mittels welchem ein von wenigstens einer Antriebsreinrichtung des Antriebsstrangs bereitzustellendes Drehmoment durch den Fahrer einstellbar ist.

8. Antriebsstrang (10) für ein Kraftfahrzeug, mit einer elektronischen Recheneinrichtung (60), mittels welcher der der Antriebsstrang zwischen einem ersten Betriebszustand, in welchem ein Zweiradantrieb des Antriebsstrangs (10) aktiviert ist, und einem zweiten Betriebszustand, in welchem ein Vierradantrieb des Antriebsstrangs (10) aktiviert ist, umschaltbar ist, wobei
die elektronische Recheneinrichtung (60) dazu ausgebildet ist:
- während einer Fahrt des Kraftfahrzeugs einen Bedarfszeitpunkt zu ermitteln, zu welchem das Umschalten von einem der Betriebszustände zu dem anderen Betriebszustand spätestens abgeschlossen sein muss, wobei der Bedarfszeitpunkt bezüglich des Ermittelns des Bedarfszeitpunkts in der Zukunft liegt; und
- in Abhängigkeit von dem ermittelten Bedarfszeitpunkt mit dem Umschalten von dem einen Betriebszustand zu dem anderen Betriebszustand zu einem dem Bedarfszeitpunkt zeitlich vorweggehenden Startzeitpunkt derart zu beginnen, dass das Umschalten spätestens zu dem Bedarfszeitpunkt abgeschlossen ist,
**dadurch gekennzeichnet, dass**
- der Bedarfszeitpunkt in Abhängigkeit von einem Reibwert ermittelt wird, welcher zumindest eine Reibung zwischen wenigstens einem Rad (18, 22) des (10) Antriebsstrangs und einer Fahrbahn, entlang welcher das Kraftfahrzeug fährt, und
- eine eine Drehzahl des Rads (18, 22) charakterisierende Messgröße mittels wenigstens eines Sensors erfasst wird, welcher wenigstens ein die Messgröße charakterisierendes elektrisches Signal bereitstellt, welches eine Anzahl an Signalflanken aufweist, auf deren Basis die Drehzahl ermittelbar ist, wobei die Anzahl mindestens 80, insbesondere mindestens 90, beträgt.

## Claims

1. Method for operating a drive train (10) of a motor vehicle, in which the drive train (10) can be switched between a first operating state, in which a two-wheel drive of the drive train (10) is activated, and a second operating state, in which a four-wheel drive of the drive train (10) is activated, wherein the drive train (10) is switched from one of the operating states to the other operating state by means of an electronic computing unit (60), wherein:
- while the motor vehicle is being driven, a requirement point in time is determined by means of the electronic computing unit (60) at which switching from the one operating state to the other operating state must be concluded at the latest, wherein the requirement point in time is in the future in relation to the determination of the requirement point in time; and
- depending on the determined requirement point in time, switching from the one operating state to the other operating state is started at a starting time chronologically preceding the requirement point in time in such a way that switching is concluded no later than the requirement point in time,
**characterized in that**
- the requirement point in time is determined depending on a friction value which characterizes at least one friction between at least one wheel (18, 22) of the (10) drive train and a roadway along which the motor vehicle is traveling, and
- a measurand characterizing a rotational speed of the wheel (18, 22) is detected by means of at least one sensor, which sensor provides at least one electrical signal characterizing the measurand, which signal has a number of signal edges on the basis of which the rotational speed can be determined, wherein the number is at least 80, in particular at least 90.

2. Method according to Claim 1,
wherein switching is started depending on a switching time period that the drive train (10) requires for switching.

3. Method according to Claim 2,
wherein the switching time period is calculated by means of the electronic computing unit (60).

4. Method according to any one of the preceding claims,
wherein the switching time period is determined depending on at least one value which is stored in a memory and retrieved from the memory.

5. Method according to Claim 1,
wherein the friction value characterizes a current friction between the wheel (18, 22) and the roadway, and/or a friction between the wheel (18, 22) and the roadway in the future in relation to the determination of the friction value.

6. Method according to Claim 1,
wherein the rotational speed is determined depending on a subset of the signal edges, wherein the subset is greater than 1, in particular greater than 3, and less than the number, and/or wherein the subset is less than 10, in particular less than 5.

7. Method according to any one of the preceding claims,
wherein the requirement point in time is determined depending on an operating state of the drive train (10), which operating state is in particular set by the driver of the motor vehicle; and/or depending on a driving profile selected by the driver of the motor vehicle; and/or depending on a state of an electronic stability program of the motor vehicle, which state is in particular set by the driver of the motor vehicle; and/or depending on a trailer operation of the motor vehicle; and/or depending on a variation in a position of a control element that is caused by the driver; by means of which a torque to be provided by at least one drive device of the drive train can be set by the driver.

8. A drive train (10) for a motor vehicle, having an electronic computing unit (60) by means of which the drive train can be switched between a first operating state, in which a two-wheel drive of the drive train (10) is activated, and a second operating state, in which a four-wheel drive of the drive train (10) is activated, wherein
the electronic computing unit (60) is designed to:
- to determine, while the motor vehicle is being driven, a requirement point in time at which switching from the one operating state to the other operating state must be concluded at the latest, wherein the requirement point in time is in the future in relation to the determination of the requirement point in time; and
- depending on the determined requirement point in time, to begin switching from the one operating state to the other operating state at a starting time chronologically preceding the requirement point in time, in such a way that switching is concluded no later than the requirement point in time,
**characterized in that**
- the requirement point in time is determined depending on a friction value which at least one friction between at least one wheel (18, 22) of the (10) drive train and a roadway along which the motor vehicle travels, and
- a measurand characterizing a rotational speed of the wheel (18, 22) is detected by means of at least one sensor, which sensor provides at least one electrical signal characterizing the measurand, which signal has a number of signal edges on the basis of which the rotational speed can be determined, wherein the number is at least 80, in particular at least 90.

## Revendications

1. Procédé de fonctionnement d'une chaîne cinématique (10) d'un véhicule automobile, dans lequel la chaîne cinématique (10) peut être commutée entre un premier état de fonctionnement, dans lequel un entraînement à deux roues de la chaîne cinématique (10) est activé et un second état de fonctionnement, dans lequel un entraînement à quatre roues de la chaîne cinématique (10) est activé, dans lequel la chaîne cinématique (10) est commutée d'un des états de fonctionnement à l'autre état de fonctionnement au moyen d'un dispositif de calcul électronique (60), dans lequel :
- pendant un déplacement du véhicule automobile au moyen du dispositif de calcul électronique (60), un moment utile est déterminé, auquel la commutation dudit état de fonctionnement à l'autre état de fonctionnement doit être achevée au plus tard, dans lequel le moment utile se situe dans le futur par rapport à la détermination du moment utile ; et
- en fonction du moment utile déterminé, la commutation dudit état de fonctionnement à l'autre état de fonctionnement est démarrée à un moment de début temporellement préalable au moment utile, de sorte que la commutation soit achevée au plus tard au moment utile,
**caractérisé en ce que**
- le moment utile est déterminé en fonction d'un coefficient de frottement, qui caractérise au moins un frottement entre au moins une roue (18, 22) de la chaîne cinématique (10) et la voie de circulation, le long de laquelle le véhicule automobile se déplace, et
- une valeur de mesure caractérisant une vitesse de rotation de la roue (18, 22) est détectée au moyen d'au moins un capteur, qui fournit au moins un signal électrique caractérisant la valeur de mesure, qui présente un nombre de flancs de signal, sur la base desquels la vitesse de rotation peut être déterminée, dans lequel le nombre est d'au moins 80, en particulier d'au moins 90.

2. Procédé selon la revendication 1,
dans lequel la commutation est démarrée en fonction d'une durée de commutation, dont la chaîne cinématique (10) a besoin pour la commutation.

3. Procédé selon la revendication 2,
dans lequel la durée de commutation est calculée au moyen du dispositif de calcul électronique (60).

4. Procédé selon l'une quelconque des revendications précédentes,
dans lequel la durée de commutation est déterminée en fonction d'au moins une valeur, qui est mémorisée dans une mémoire et appelée depuis la mémoire.

5. Procédé selon la revendication 1,
dans lequel le coefficient de frottement caractérise un frottement réel entre la roue (18, 22) et la voie de circulation et/ou un frottement ayant lieu à l'avenir par rapport à la détermination du coefficient de frottement entre la roue (18, 22) et la voie de circulation.

6. Procédé selon la revendication 1,
dans lequel la vitesse de rotation est déterminée en fonction d'une quantité partielle des flancs de signal, dans lequel la quantité partielle est supérieure à 1, en particulier supérieure à 3 et inférieure au nombre et/ou dans lequel la quantité partielle est inférieure à 10, en particulier inférieure à 5.

7. Procédé selon l'une quelconque des revendications précédentes,
dans lequel le moment utile est déterminé en fonction d'un état de fonctionnement de la chaîne cinématique (10), en particulier réglé par le conducteur du véhicule automobile et/ou en fonction d'un profil de conduite sélectionné par le conducteur du véhicule automobile et/ou en fonction d'un état du programme de stabilité électronique du véhicule automobile, en particulier réglé par le conducteur du véhicule automobile et/ou en fonction d'une traction de remorque du véhicule automobile et/ou en fonction d'une modification effectuée par le conducteur d'une position d'un élément de commande, au moyen duquel un couple à fournir par au moins un dispositif d'entraînement de la chaîne cinématique peut être réglé par le conducteur.

8. Chaîne cinématique (10) pour un véhicule automobile, comprenant un dispositif de calcul électronique (60), au moyen duquel la chaîne cinématique peut être commutée entre un premier état de fonctionnement, dans lequel un entraînement à deux roues de la chaîne cinématique (10) est activé et un second état de fonctionnement, dans lequel un entraînement à quatre roues de la chaîne cinématique (10) est activé, dans laquelle
le dispositif de calcul électronique (60) est conçu pour :
- pendant un déplacement du véhicule automobile, déterminer un moment utile, auquel la commutation dudit état de fonctionnement à l'autre état de fonctionnement doit être achevée au plus tard, dans laquelle le moment utile se situe dans le futur par rapport à la détermination du moment utile ; et
- en fonction du moment utile déterminé, la commutation dudit état de fonctionnement à l'autre état de fonctionnement est démarrée à un moment de début temporellement préalable au moment utile, de sorte que la commutation soit achevée au plus tard au moment utile,
**caractérisée en ce que**
- le moment utile est déterminé en fonction d'un coefficient de frottement, qui au moins un frottement entre au moins une roue (18, 22) de la chaîne cinématique (10) et la voie de circulation, le long de laquelle le véhicule automobile se déplace, et
- une valeur de mesure caractérisant une vitesse de rotation de la roue (18, 22) est détectée au moyen d'au moins un capteur, qui fournit au moins un signal électrique caractérisant la valeur de mesure, qui présente un nombre de flancs de signal, sur la base desquels la vitesse de rotation peut être déterminée, dans lequel le nombre est d'au moins 80, en particulier d'au moins 90.
